# EUROPÄISCHE PATENTSCHRIFT

(11) **EP 0 893 052 B1**
(45) Veröffentlichungstag und Bekanntmachung des Hinweises auf die Patenterteilung: **01.03.2006**
(21) Anmeldenummer: 98112699.8
(22) Anmeldetag: 09.07.1998
(51) Int. Cl.: A01D 90/12, G01G 19/08

(54) **Ladewagen mit zwei oder mehr Achsen**
Trailer with two or more axles
Remorque à deux ou plusieurs essieux

(30) Priorität: 24.07.1997 DE 19731769
(43) Veröffentlichungstag der Anmeldung: 27.01.1999
(73) Patentinhaber: CLAAS Saulgau GmbH, 88340 Bad Saulgau (DE)
(72) Erfinder: Geng, Manfred, 88348 Saulgau (DE)
(74) Vertreter: Eisele, Otten, Roth & Dobler

(56) Entgegenhaltungen:
- DE-A- 3 810 386
- DE-U- 8 707 025
- DE-U- 9 112 539
- US-A- 3 854 540
- US-A- 4 456 084
- US-A- 4 832 141

## Beschreibung

Die Erfindung bezieht sich auf landwirtschaftliche Transportgeräte insbesondere Ladewagen mit zwei oder mehr Achsen gemäß dem Oberbegriff von Anspruch 1.

Ein Transportgerät in der Form eines Lastwagens und/oder dessen Anhänger mit dem Merkmalen des Oberbegriffs von Anspruch 1 ist aus US-A-4 832 141 bekannt.

In der Praxis nimmt der überbetriebliche Einsatz von Landmaschinen zu, so daß seitens der Lohnunternehmen bezüglich der oben beschriebenen Ladewagen eine auf die eingebrachte Erntegutmenge bezogene Berechnung der erbrachten Leistungen an Bedeutung gewinnt. Betriebswirtschaftliche Gesichtspunkte erhöhen außerdem das Interresse der Landwirte daran, auf möglichst einfache Weise, verbunden mit einem geringen Transport- und Umrüstaufwand die Masse des aufgenommenen Erntegutes der Ladewagen zu ermittel.

Der Erfindung liegt deshalb die Aufgabe zugrunde, ein landwirtschaftliches Transportgerät gemäß dem Oberbegriff von Anspruch 1 so zu gestalten, daß eine exakte Massenbestimmung des aufgenommenen Erntegutes auch bei unebenen Verhältnissen gewährleistet ist.

Erfindungsgemäß wird die Aufgabe durch die Merkmale des Anspruchs 1 gelöst. Vorteilhafte Ausgestaltungen sind Gegenstand der Unteransprüche und werden anhand eines Ausfuhrungsbeispiels und dazugehörigen Zeichnungen näher beschrieben.

Schematisch ist in
- Figur 1: ein gattungsgemäßer Ladewagen mit fluidbetätigten Stellaggregaten und in
- Figur 2: die erfindungsgemäße Einrichtung zur Massenbestimmung am Beispiel eines fluidbetätigten Stellaggregates dargestellt.

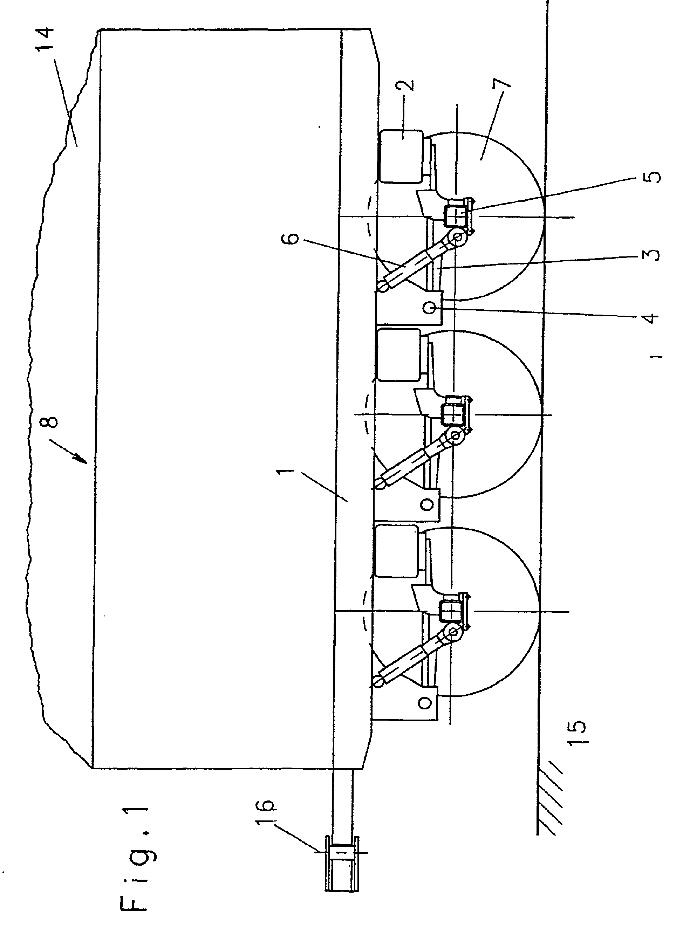

In Figur 1 ist ein nicht näher beschriebener Ladewagen 8 dargestellt, an dessen Fahrzeugrahmen 1 drei Starrachsen 5 fixiert sind, an deren Seiten je ein Rad 7 angebracht ist. Jedes Rad 7 kann durch einen Luftfeder-Rollbalg 2 abgefedert und in seiner vertikalen Lage verändert werden. Der Luftfeder-Rollbalg 2 ist obenseitig am Fahrzeugrahmen und untenseitig an einem ihm zugeordneten Achslenker 3 fixiert. An der dem Luftfeder-Rollbalg 2 abgewanden Seite ist der Achslenker 3 im Drehpunkt 4 schwenkbar am Fahrzeugrahmen 1 angelenkt. Jede Starrachse 5 unterkreuzt die ihr zugeordneten Achslenker 3 und ist mit diesen fest verbunden. Im Bereich des jeweiligen Achslenkers 3 sind die Starrachsen 5 durch geneigt zum Fahrzeugrahmen 1 angeordnete Stoßdämpfer 6 mit diesem verbunden.

Durch unterschiedliche Druckbeaufschlagung jedes Luftfeder-Rollbalges 2 kann das ihm jeweils zugeordnete Rad 7 in seiner vertikalen Lage am Fahrzeugrahmen verändert werden.

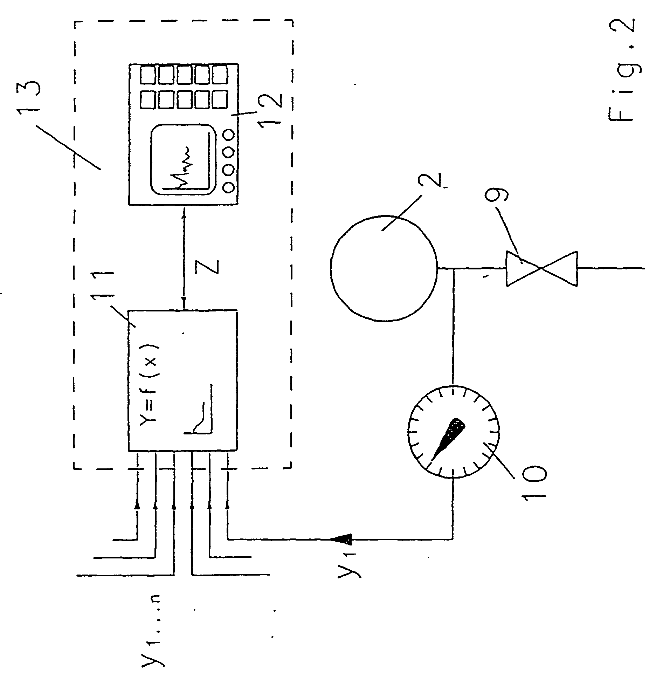

Diese bereits aus der Patentanmeldung P 197 21 130.5 bekannte Ausführung eines zwei- oder mehrachsigen Ladewagens wird mit der Erfindung dahingehend erweitert, daß über die Druckmessung in jedem Luftfeder-Rollbalg 2 die Massebestimmung des Ladewagens 8 möglich wird. Hierfür wird zwischen dem Sperrventil 9 (Figur 2) und dem Luftfeder-Rollbalg 2 ein nicht näher beschriebener Druckaufnehmer 10 installiert, der elektronisch weiterverarbeitbare Ausgangssignale Y_{1..n} erzeugt. Die Ausgangssignale Y_{1..n} aller Druckaufnehmer 10 bilden die Eingangsgrößen für den kalibrierenden und auswertenden Steuerblock 11, dessen Ausgangssignal Z gleichzeitig Eingangssignal der Stell- und Auswerteinheit 12 ist. In einer geteilten Ausführungsform wird der kalibrierende und auswertende Steuerblock 11 am Ladewagen 8 und die Stell- und Auswerteinheit 12 im nicht dargestellten Zugfahrzeug des Ladewagens 8 angeordnet. Aufgrund dessen, daß übliche Zugfahrzeuge mit einer schwingungsdämpfenden und vor Umwelteinflüssen schützenden Fahrerkabine ausgestattet sind, ist in einer weiteren vorteilhaften Ausführung vorgesehen, den kalibrierenden und auswertenden Steuerblock 11 und die Stell- und Auswerteinheit 12 zu einem Modul 13 zusammenzufassen und in der nicht dargestellten Fahrerkabine des Zugfahrzeugs zu installieren.

Verfügt das nicht dargestellte Zugfahrzeug über eine universelle Stell- und Auswerteinheit, kann der kalibrierende und auswertende Steuerblock 11 zur Einsparung der damit zusätzlichen Stell- und Auswerteinheit 12 so ausgeführt sein, daß er seine Daten im Format der universellen Stell- und Auswerteinheit ausgeben und ein derartiges Format auch einlesen kann.

Die Verbindung der einzelnen Komponenten der gesamten Meßeinrichtung erfolgt über nicht näher erläuterte und ansich bekannte Leitungssysteme.

Zur Bestimmung der Masse des auf dem Ladewagen 8 befindlichen Erntegutes 14 wird eine Druckdifferenzmessung durchgeführt, die sich aus zwei, vom Fahrer der Zugmaschine an der

Stell- und Auswerteinheit 12 ausgelösten Druckmessungen, nähmlich der Druckermittlung bei unbefülltem und befülltem Ladewagen 8 zusammensetzt. Vor jeder Druckermittlung in den Luftfeder-Rollbälgen 2 muß bei unebener Aufstandsfläche 15 des Ladewagens 8 und der Zugmaschine vom Fahrer der Zugmaschine durch Druckbeaufschlagung der Luftfeder-Rollbälge 2 dafür gesorgt werden, daß der Ladewagen 8 teilweise oder ganz angehoben wird und sich nicht über die nicht näher beschriebene Anhängevorrichtung 16 auf der Zugmaschine abstützt.

Damit ist dem Fachmann eine Anleitung gegeben, die erfindungsgemäße Bestimmung der Erntegutmasse eines Ladewagens in gleicher oder abgewandelter Form an den beschriebenen oder anders gearteten landwirtschaftlichen Arbeitsmaschinen einzusetzen um die beschriebenen Effekte zu erzielen.

## Patentansprüche

1. Landwirtschaftliches Transportgerät, insbesondere Ladewagen, mit zwei oder mehr Achsen, wobei eine Fluidfedereinheit wenigstens an jeder Achsseite fluidbetätigte Stellaggregate umfasst und als eine Einrichtung zur Massenbestimmung eines vom Transportgerät aufgenommenen Erntegutes ausgebildet ist, **dadurch gekennzeichnet, dass** den Stellaggregaten Druckaufnehmer zugeordnet sind, die in Verbindung mit mindestens je einem kalibrierenden und auswertenden Steuerblock sowie mindestens je einer Stell- und Auswerteeinheit die Einrichtung zur Massenbestimmung bildet, und dass einzeln steuerbare Stellaggregate zum Verändern eines Höhenabstands zwischen einem Fahrzeugrahmen und einem Rad oder einer Tandemschwinge vorgesehen sind.

2. Ladewagen nach Anspruch 1,
**dadurch gekennzeichnet,**
**daß** kalibrierender und auswertender Steuerblock (11) sowie die Stell- und Auswerteinheit (12) voneinander getrennt ausgeführt sind.

3. Ladewagen nach Anspruch 2,
**dadurch gekennzeichnet,**
**daß** der kalibrierende und auswertende Steuerblock (11) am Ladewagen (8) fixiert ist und die Stell- und Auswerteinheit (12) über ein flexibles Leitungssystem ortsveränderlich ist.

4. Ladewagen nach Anspruch 2,
**dadurch gekennzeichnet,**
**daß** der kalibrierende und auswertende Steuerblock (11) und die Stell- und Auswerteinheit (12) über ein leitungsfreies System zur Datenübertragung verfügen.

5. Ladewagen nach Anspruch 1,
**dadurch gekennzeichnet,**
**daß** der am Ladewagen (8) fixierte kalibrierende und auswertende Steuerblock (11) die durch ihn verarbeiteten Informationen im Datenformat ansich bekannter Steuer- und Anzeigegeräte ausgeben und deren Datenformat auch einlesen kann.

6. Ladewagen nach Anspruch 1,
**dadurch gekennzeichnet,**
**daß** kalibrierender und auswertender Steuerblock (11) sowie die Stell- und Auswerteinheit (12) einteilig als Modul (13) ausgeführt sind und über ein flexibles Leitungssystem verfügen.

7. Ladewagen nach Anspruch 6,
**dadurch gekennzeichnet,**
**daß** das Modul (13) über ein leitungsfreies System zur Datenübertragung verfügt.

## Claims

1. An agricultural transport arrangement, in particular a loading truck, comprising two or more axles, wherein a fluid spring unit includes fluid-actuated setting assemblies at least at each axle side and is in the form of a device for determining the mass of a crop material received by the transport arrangement, **characterised in that** associated with the setting assemblies are pressure sensors which in conjunction with at least one respective calibrating and evaluating control block and at least one respective setting and evaluation unit forms the device for determining mass, and that there are provided individually controllable setting assemblies for varying a spacing in respect of height between a vehicle frame and a wheel or a tandem rocking arm.

2. A loading truck according to claim 1 **characterised in that** the calibrating and evaluating control block (11) and the setting and evaluation unit (12) are provided separately from each other.

3. A loading truck according to claim 2 **characterised in that** the calibrating and evaluating control block (11) is fixed to the loading truck (8) and the setting and evaluation unit (12) is variable in position by way of a flexible line system.

4. A loading truck according to claim 2 **characterised in that** the calibrating and evaluating control block (11) and the setting and evaluation unit (12) have a wireless system for data transmission.

5. A loading truck according to claim 1 **characterised in that** the calibrating and evaluating control block (11) which is fixed to the loading truck (8) can output the information processed thereby in the data format of per se known control and display devices and can also read in the data format thereof.

6. A loading truck according to claim 1 **characterised in that** the calibrating and evaluating control block (1) and the setting and evaluation unit (12) are integrally in the form of a module (13) and have a flexible line system.

7. A loading truck according to claim 6 **characterised in that** the module (13) has a wireless system for data transmission.

## Revendications

1. Appareil de transport agricole, plus particulièrement remorque, munie de deux essieux ou plus, dans lequel un système de suspension à fluide comporte au moins sur chaque côté d'essieu des modules de réglage à commande par fluide et est agencé en dispositif permettant de déterminer la masse de produit récolté chargé dans l'appareil de transport, **caractérisé par le fait qu'**aux modules de réglage sont associés des capteurs de pression qui, en liaison avec au moins un bloc de commande d'étalonnage et de traitement et d'au moins une unité de réglage et de traitement, forment le dispositif de détermination de la masse, et **par le fait que** des modules de réglage commandés individuellement sont prévus pour modifier une hauteur entre un châssis de véhicule et une roue ou un bras oscillant tandem.

2. Remorque selon la revendication 1, **caractérisée par le fait que** le bloc de commande d'étalonnage et de traitement (11) et l'unité de réglage et de traitement (12) sont séparés l'un de l'autre.

3. Remorque selon la revendication 2, **caractérisée par le fait que** le bloc de commande d'étalonnage et de traitement (11) est fixé à la remorque (8) et que l'unité de réglage et de traitement (12) est rendue mobile par un système de conduites flexibles.

4. Remorque selon la revendication 2, **caractérisée par le fait que** le bloc de commande d'étalonnage et de traitement (11) et l'unité de réglage et de traitement (12) disposent d'un système sans fil pour la transmission de données.

5. Remorque selon la revendication 1, **caractérisée par le fait que** le bloc de commande d'étalonnage et de traitement (11) fixé à la remorque (8) délivre au format de données les informations traitées par lui à des appareils de commande et d'affichage connus et peut également lire le format de données de ceux-ci.

6. Remorque selon la revendication 1, **caractérisée par le fait que** le bloc de commande d'étalonnage et de traitement (11) et l'unité de réglage et de traitement (12) sont réalisés en un élément sous la forme d'un module (13) et sont munis d'un système de conduites flexibles.

7. Remorque selon la revendication 6, **caractérisée par le fait que** le module (13) dispose d'un système sans fil pour la transmission de données.
